# EUROPEAN PATENT SPECIFICATION

(11) **EP 0 579 181 B1**
(45) Date of publication and mention of the grant of the patent: **22.05.1996**
(21) Application number: 93111222.1
(22) Date of filing: 13.07.1993
(51) Int. Cl.: B60S 9/10, B60R 1/02, E06C 5/38, B66C 23/80

(54) **A central control unit for controllable placement supports of a fire-fighting vehicle with a turntable ladder or the like**
Zentrale Steuereinrichtung für betätigbare Aufstellstützen eines Brandschutzfahrzeuges mit Drehleiter oder dergleichen
Unité de commande centrale pour des supports de positionnement contrôlables d'un véhicule de lutte contre l'incendie équipé d'une échelle tournante ou analogue

(30) Priority: 14.07.1992 DE 4223041
(43) Date of publication of application: 19.01.1994
(73) Proprietor: IVECO MAGIRUS AG, D-89079 Ulm (DE)
(72) Inventor: Keller, Paul, D-7933 Schelklingen (DE)
(74) Representative: Boggio, Luigi

(56) References cited:
- EP-A- 0 163 544
- DE-A- 1 634 769
- FR-A- 1 257 774
- US-A- 3 937 563
- US-A- 4 124 226

## Description

This invention relates to a central control unit for four controllable placement supports of a fire-fighting vehicle with a turntable ladder mobile crane or the like, having adjustable side exterior rear-view mirrors of the driver's cab.

Central control unit of the aforementioned type provide the possibility of operation at the rear of the fire-fighting vehicle or the like. In order to operate the unit, the driver has to leave the driver's cab of the vehicle and actuate the operating elements on the left and right at the rear of the vehicle. The operator, who is generally the driver in the cab or an accompanying person in the cab, has to spend valuable time travelling to the rear of the vehicle, which is time lost in the event of an emergency.

From the document DE-A-2 840 045 is known a mobile crane including a control unit of the above type, which comprises combined electrical and hydraulic control elements. Electrical elements involve costs, particularly wiring costs, and in particular are subject to contact corrosion, which impairs operational reliability. The known device is therefore unsuitable for rescue vehicles of the type concerned here, which (in addition to rapid and simple manipulation) demand an increased level of operational reliability.

It is also known from the document DE-A-1 634 769 a control unit for a crane vehicle using pneumatically operated valves for controlling hydraulic cylinders of the four placement supports. The air under pressure is supplied by a compressed air container, while the oil for the cylinders is supplied by a separate oil tank.

Both the above known control device cannot be operated centrally from a fixed position in the driver's cab, since in no case can all the lateral exterior placement supports be observed simultaneously.

The object of the invention is to create a central control unit of the above type, which is of simple construction and which can be operated rapidly, safely and, in particular, reliably, with the aid of simple means.

This object which underlies the invention is achieved by means of the features defined by the claim 1.

The subject of the invention is advantageously developed further by means of the features of subsidiary claims 2 to 7.

The essence of the invention is the design of the central control unit either as a completely or hydraulic or as a completely pneumatic control system with the use of the main control valves and relay valves, wherein the control unit can be operated from the driver's cab and can be supplied by the hydraulic or pneumatic systems which already exist in the vehicle.

In particular, central operation from the driver's cab is made possible because, according to the feature of claim 1, the side exterior rear-view mirrors of the driver's cab are disposed on the driver's cab so that they are adjustable, i.e. they can be extended laterally - particularly by means of control cylinders acted upon hydraulically or pneumatically (depending upon the control system used) by being coupled to the control system, and are optionally also disposed so that they are pivotable. Therefore, when the control system is put into operation for the purpose of lowering the placement supports to the ground beneath the vehicle, the exterior rear-view mirrors are also automatically adjusted so that the lateral front and rear placement supports can be observed from the driver's seat.

A particularly advantageous embodiment is characterised in that the relay valves are disposed in the driver's cab or in the region of the driver's cab and the main control valve is disposed in the region of the rear axle of the vehicle.

The relay valves, which are constructed as single- or double-axis units, are preferably fitted with an integral dead man's handle, and in particular all the bracing cylinders can be individually extended or retracted in the horizontal direction, whilst the diagonal, downwardly-directed support cylinders can be operated jointly, in order rapidly to bring a fire-fighting vehicle or the like into its position of use.

The invention enables the vehicle to be supported immediately - and in particular, reliably - after reaching the location in which it is to be used, without the operator having to get out of or back into the vehicle. The operator need never leave his operating position inside the driver's cab, since the extension and lowering operation on the support cylinders can be observed by means of the automatically adjustable exterior rear-view mirrors. A rapid change of position is therefore made possible, due to the short distances involved and the central location of the control elements within operating range of the driver's seat. Overall there are fewer switching elements than there are with the known rear-operated control unit, for example; this is due in particular to the provision of integral dead man's handles in the relay valves in the region of the driver's cab ("joy sticks").

Solely hydraulic or pneumatic control elements are used in the driver's cab according to the invention, so that significant advantages arise in particular in relation to the central control unit according to DE 28 40 045, which provides in particular for a control unit of the type cited initially comprising combined electrical and hydraulic control elements. The operator therefore in each case has to leave the driver's seat, open the driver's cab door and/or glance backwards through the side window, in order to be able to observe the correct extension of the horizontal braces in particular during a control operation. This disadvantage is therefore eliminated according to the present invention, because the exterior rear-view mirrors are brought into position as well when a control operation takes place. According to the invention, when the placement supports are retracted again and when a fire-fighting vehicle or the like is prepared for a further journey, the lateral exterior rear-view mirrors return to the normal rear-view mirror position.

The invention is described in more detail below by means of an embodiment and with reference to the accompanying drawings, where:

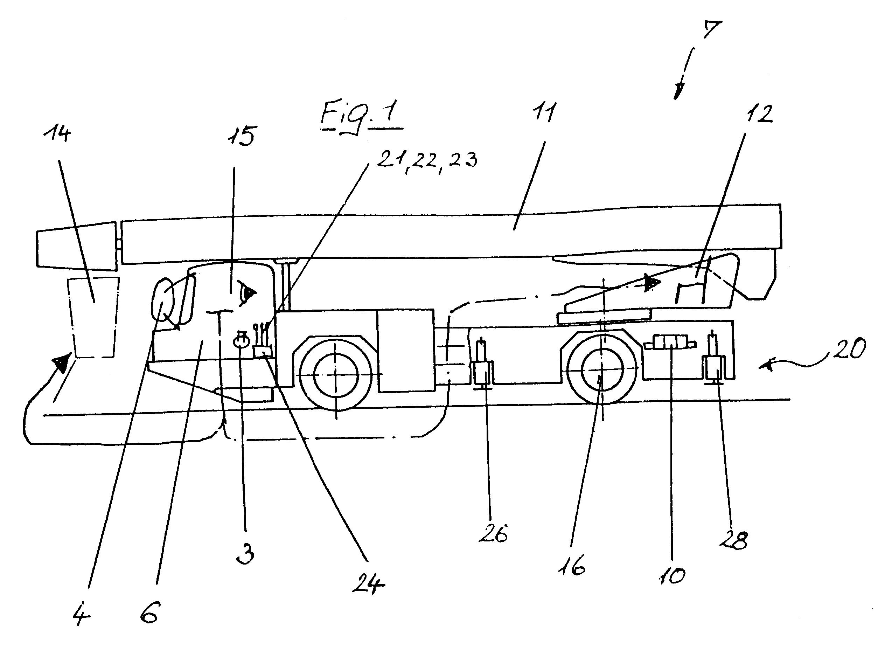

- Figure 1: is a schematic side view of a fire-fighting vehicle equipped with the invention;
- Figure 2: is a schematic plan view of the switching lever arrangement shown in Figure 1; and
- Figure 3: is a circuit diagram of a hydraulically operated central control unit for the control of four placement supports of a fire-fighting vehicle as shown in Figure 1.

As shown in the drawings, a fire-fighting vehicle (7) with a driver's cab (6) and a turntable ladder (11) comprises a central control unit (20) for the hydraulic operation of four placement supports which are provided on the left and right on both sides of the vehicle (placement support 25 front right, placement support 26 front left, placement support 27 rear right, placement support 28 rear left). Each placement support comprises a diagonal support cylinder (8), which can be extended or retracted in the horizontal direction by means of a horizontal bracing cylinder (9).

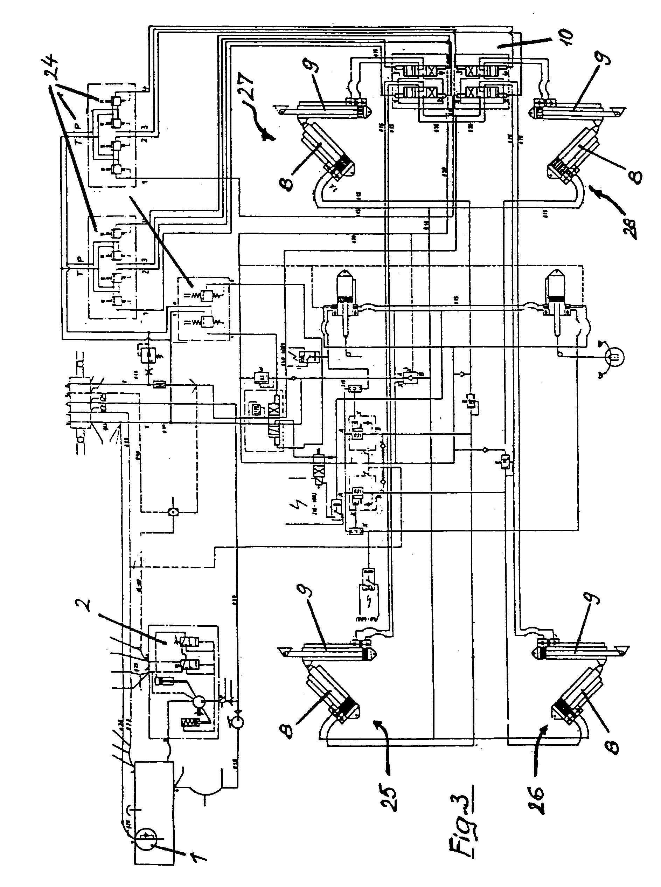

In particular, and in addition to the aforementioned bracing and support cylinders (9, 8), the central control unit (20) comprises a main control valve (10) hydraulically connected upstream of it, which is disposed in the region of the rear axle (16) of the vehicle. A relay valve (24), which is disposed in the driver's cab and is constructed in three parts, is hydraulically connected upstream of the main control valve (10). This can be seen in particular from the upper right-hand portion of the hydraulic circuit shown in Figure 3.

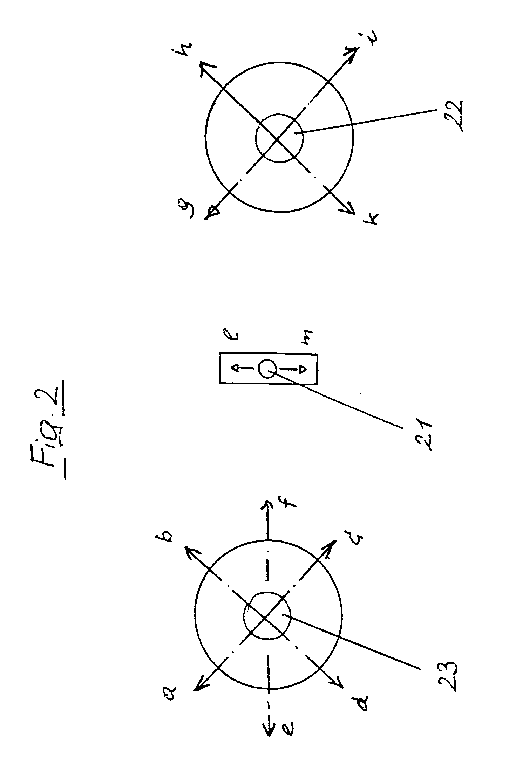

The three-part hydraulic relay valve (24) has integral dead man's handles with three associated switching levers (21, 22 and 23). The left-hand horizontal pair of bracing cylinders can be extended and retracted from the driver's (15) seat in the driver's cab (6) by means of the switching lever (23). This can be seen in particular from the left-hand portion of Figure 2. In this respect, both horizontal bracing cylinders (9) can be extended or retracted simultaneously (switch positions e and f), and both bracing cylinders (9) can also be operated individually (switch position a = extension of the front left cylinder, switch position b = retraction of the front left cylinder, switch position c = retraction of the rear left cylinder, switch position d = extension of the rear left cylinder).

As shown on the right of Figure 2, the right-hand horizontal pair of bracing cylinders can be operated in the same way by means of the switching lever 22 (switch position g = retraction of the front right cylinder, switch position h = extension of the front right cylinder, switch position i = extension of the rear right cylinder, switch position k = retraction of the rear right cylinder).

The central switching lever (21) is associated with all the support cylinders (8) and permits simultaneous retraction of the support cylinders when in switch position m, or simultaneous extension of the diagonal support cylinders when in switch position 1, as shown in the central portion of Figure 2.

Two hydraulically adjustable, side exterior rear-view mirrors (4) are coupled to the hydraulic central control unit (20) (omitted from the illustration of the hydraulic circuit shown in Figure 3). When the central control unit is operated for the purpose of lowering the placement supports, the hydraulic control cylinders of these exterior rear-view mirrors are automatically laterally extended, so that the lateral placement support region towards the base of the vehicle can be observed on the left and right simultaneously from the driver's (15) seat in the driver's cab (6). Both side exterior rear-view mirrors (4) return to their normal position when the placement supports (25 to 28) are completely raised and laterally retracted, i.e. when the fire-fighting vehicle (7) is in its travelling position.

If, after a journey, the fire-fighting vehicle (7) arrives at a place of deployment where, for example, the turntable ladder (11) including the front operator cage (14) is to be swung up and extended, the switching levers (21 to 23) are operated by the driver (15) in the desired manner as shown in Figure 2, so that the placement supports (25 to 28) make contact with the ground at the sides. The switch of an auxiliary power take-off (3) is actuated beforehand, in order to switch on the hydraulic pump (2). The hydraulic pump (2) shown in Figure 3 henceforth supplies hydraulic medium, e.g oil, from the oil reservoir (1) shown in Figure 3 to the hydraulic circuit of the central control unit (20). Each horizontal bracing cylinder (9) can be individually extended as far as required. Following this, all the diagonal support cylinders (8) are lowered simultaneously by operating the switching lever (21), in order to support the vehicle. The switching lever (21) is moved to switch position 1 for this. The lateral extension and lowering of the placement supports (25 to 28) can be observed by means of the exterior rear-view mirrors (4).

After the support operation has been completed, the operator can immediately climb into the operator cage (14) or into the turntable ladder seat (12) of the main control platform.

The three-part hydraulic relay valve (24) is designed in particular for a lower pressure of the order of 30 bar.

The hydraulic control unit may be replaced by a pneumatic control unit, which in particular is coupled to the pneumatic system of the vehicle, in order advantageously to make use of a ready-installed medium and to form a control unit which is even easier and simpler.

The invention is suitable for fire-fighting vehicles, platforms for lifting operations, mobile cranes, etc.

## Claims

1. A central control unit (20) for four controllable placement supports (25-28) of a fire-fighting vehicle (7) with a turntable ladder (11), mobile crane or the like, having adjustable side exterior rear-view mirrors (4) of the driver's cab (6), wherein a horizontal bracing cylinder (9) and a diagonal support cylinder (8) are associated with each placement support (25-28) and are adapted to be controlled by means of a corresponding main control valve (10) and a relay valve (24) controlled from said driver's cab (6), characterised in that said main control and relay valves (10, 24) and said bracing and support cylinders (9, 8) are acted upon by the same hydraulic or pneumatic medium supplied from the hydraulic or pneumatic system of the vehicle, and in that said rear-view mirrors (4) are coupled to said central control unit (20) and are automatically adjusted each one on the lateral front and rear placement supports (25-26) of the vehicle on placing said central control unit (20) in operation.

2. A control unit according to claim 1, characterised in that said rear-view mirrors (4) are located outwardly on said driver's cab (6) and are so adjusted by being laterally extended on the corresponding side, so that said lateral front and rear placements (25-25) can be observed simultaneously by the driver from said cab (6).

3. A control unit according to claim 1 or 2, characterised in that said rear-view mirrors (4) have control cylinders which are actuated hydraulically or pneumatically according to said control unit (20) and are supplied by said hydraulic or pneumatic system.

4. A control unit according to any one of claims 1 to 3, characterised in that the relay valves (24) are disposed in the driver's cab (6) and the main control valve (10) is disposed in the region of the rear axle (16) of the vehicle.

5. A control unit according to any one of claims 1 to 4, characterised in that single-axis or double-axis relay valves (24) are constructed with an integral dead man's handle.

6. A control unit according to any one of claims 1 to 5, characterised in that each horizontal bracing cylinder (9) can be operated individually.

7. A control unit according to any one of claims 1 to 6, characterised in that the four diagonal support (8) cylinders can be operated jointly.

## Patentansprüche

1. Zentrale Steuereinrichtung (20) für vier betätigbare Aufstellstützen (25-28) eines Brandschutzfahrzeuges (7) mit einer Drehleiter (11), einem mobilen Kran oder dergleichen, das verstellbare seitliche Außenrückspiegel (4) am Fahrerhaus (6) aufweist, wobei ein horizontaler Haltezylinder (9) und ein diagonaler Stützzylinder (8) jeder Aufstellstütze (25-28) zugeordnet und für die Kontrolle durch ein entsprechendes Hauptsteuerventil (10) und ein Schaltventil (24) geeignet sind, die vom Fahrerhaus (6) aus gesteuert werden, dadurch **gekennzeichnet**, daß die Hauptsteuer- und Schaltventile (10,24) und die Stütz- und Haltezylinder (8,9) über das gleiche hydraulische oder pneumatische Medium betrieben werden, das vom Hydraulik- oder Pneumatiksystem des Fahrzeuges zugeführt wird, und daß die Rückspiegel (4) mit der zentralen Steuereinrichtung (20) gekoppelt sind und automatisch auf die seitlichen vorderen und hinteren Aufstellstützen (25-26) des Fahrzeuges verstellt werden, wenn die Steuereinrichtung (20) in Betrieb ist.

2. Steuereinrichtung nach Anspruch 1, dadurch **gekennzeichnet**, daß die Rückspiegel (4) von außen am Fahrerhaus (16) angeordnet sind und durch seitliches Ausfahren auf der entsprechenden Seite so verstellt werden, daß die seitlichen vorderen und hinteren Aufstellstützen (25-25) gleichzeitig vom Fahrerhaus aus (6) beobachtet werden können.

3. Steuereinrichtung nach Anspruch 1 oder 2, dadurch **gekennzeichnet**, daß die Rückspiegel (4) Steuerzylinder aufweisen, die über die Steuereinrichtung (20) hydraulisch oder pneumatisch betätigbar sind und von dem hydraulischen oder pneumatischen System versorgt sind.

4. Steuereinrichtung nach einem der vorherigen Ansprüche 1 bis 3, dadurch **gekennzeichnet**, daß die Schaltventile (24) im Fahrerhaus (6) angeordnet sind, und daß das Hauptsteuerventil (10) im Bereich der Hinterachse (16) des Fahrzeuges angeordnet ist.

5. Steuereinrichtung nach einem der vorherigen Ansprüche 1 bis 4, dadurch **gekennzeichnet**, daß einachsige oder doppelachsige Schaltventile (24) mit einer vollständigen Sicherheitseinrichtung versehen sind.

6. Steuereinrichtung nach einem der Ansprüche 1 bis 5, dadurch **gekennzeichnet**, daß jeder horizontale Haltezylinder (9) einzeln betätigt werden kann.

7. Steuereinrichtung nach einem der Ansprüche 1 bis 6, dadurch **gekennzeichnet**, daß die vier diagonalen Stützzylinder (8) gemeinsam betätigt werden können.

## Revendications

1. Unité de commande centrale (20) pour quatre supports de positionnement contrôlables (25-28) d'un véhicule de lutte contre l'incendie (7) équipé d'une échelle tournante (11), d'une grue mobile ou analogue, comportant des rétroviseurs extérieurs latéraux (4) réglables de la cabine de conducteur (6), dans laquelle un cylindre d'ancrage horizontal (9) et un cylindre de support diagonal (8) sont associés à chaque support de positionnement (25-28) et conçus pour être commandés par une vanne de commande principale correspondante (10) et par une vanne de relais (24) commandée depuis la cabine de conducteur (6), caractérisée en ce que la vanne de commande principale (10), la vanne de relais (24) et les cylindres d'ancrage et de support (9, 8) sont actionnés par le même agent hydraulique ou pneumatique fourni par le système hydraulique ou pneumatique du véhicule, et en ce que les rétroviseurs (4) sont couplés à l'unité de commande centrale (20) et sont réglés automatiquement à chacun des supports de positionnement latéraux avant et arrière (25-26) du véhicule lorsqu'on met en marche l'unité de commande centrale (20).

2. Unité de commande selon la revendication 1, caractérisée en ce que les rétroviseurs (4) sont placés à l'extérieur de la cabine de conducteur (6) et sont réglés, en étant déployés latéralement du côté correspondant, de façon que les positionnements latéraux avant et arrière (25-25) puissent être observés simultanément par le conducteur depuis la cabine (6).

3. Unité de commande selon la revendication 1 ou 2, caractérisée en ce que les rétroviseurs (4) comportent des cylindres de commande qui sont actionnés hydrauliquement ou pneumatiquement suivant l'unité de commande (20), et sont alimentés par le système hydraulique ou pneumatique.

4. Unité de commande selon l'une quelconque des revendications 1 à 3, caractérisée en ce que les vannes de relais (24) sont disposées dans la cabine de conducteur (6), et en ce que la vanne de commande principale (10) est disposée dans la zone de l'essieu arrière (16) du véhicule.

5. Unité de commande selon l'une quelconque des revendications 1 à 4, caractérisée en ce que les vannes de relais (24) à axe simple ou à axe double, sont construites avec une poignée d'homme mort intégrée.

6. Unité de commande selon l'une quelconque des revendications 1 à 5, caractérisée en ce que chaque cylindre d'ancrage horizontal (9) peut être actionné individuellement.

7. Unité de commande selon l'une quelconque des revendications 1 à 6, caractérisée en ce que les quatre cylindres de supports diagonaux (8) peuvent être actionnés conjointement.
